# EUROPEAN PATENT APPLICATION

(11) **EP 4 834 503 A1**
(43) Date of publication of application: **04.11.2026**
(21) Application number: 25173758.1
(22) Date of filing: 30.04.2025
(51) Int. Cl.: B22F 10/28, B22F 10/34, B22F 10/73, B22F 12/90, B29C 64/153, B29C 64/307, B29C 64/357, B33Y 10/00, B33Y 30/00, B33Y 40/00, B33Y 50/02, B22F 10/85, B29C 64/393

(54) **A METHOD AND MONITORING SYSTEM FOR MONITORING RECIRCULATION OF RAW MATERIAL POWDER IN AN ADDITIVE MANUFACTURING PROCESS**

(71) Applicant: Nikon SLM Solutions AG, 23560 Lübeck (DE)
(72) Inventor: Kopschinski, Daniel, 23560 Lübeck (DE); Bentz- von Dolgow, Martin, 23560 Lübeck (DE)
(74) Representative: Patentanwälte Hemmer Lindfeld Frese Partnerschaft mbB

(57) **Abstract**

The present invention relates to a method for monitoring recirculation of raw material powder being used in an additive manufacturing process, wherein the method comprises:
- loading a load of raw material powder into a raw material powder recirculation system (9) of an additive manufacturing machine (1),
- transporting a subset of the load of raw material powder to a process chamber (3) of the additive manufacturing machine (1),
- additively manufacturing at least a segment of a three-dimensional object in a build job by melting a portion of the subset in the process chamber (3),
- filtering a residual non-melted portion of the subset,
- recirculating the filtered residual non-melted portion of the subset back to the process chamber (3),
- additively manufacturing at least another segment of said or another three-dimensional object in said or another build job by melting a sub-portion of the recirculated filtered residual non-melted portion of the subset in the process chamber (3), and
- keeping track of a subset-specific recirculation counter (RC) being indicative of how often the melted portion or sub-portion of the subset was circulated through the process chamber (3) before it was melted.

## Description

The present disclosure relates to a method and monitoring system for monitoring recirculation of raw material powder in an additive manufacturing process.

Additive manufacturing of a three-dimensional object is often referred to as 3D-printing. A specific form of additive manufacturing is laser powder bed fusion (LPBF), in which a layer of raw material powder is exposed to a high energy beam of electromagnetic radiation, such as, for example, a laser beam or a particle beam, for selectively melting particles of the raw material powder. The three-dimensional object is manufactured by sequentially and selectively melting layer by layer of raw material powder. The melted layers solidify to form the three-dimensional object.

Compared to conventional manufacturing techniques like moulding, additive manufacturing of a three-dimensional objects consumes considerably more time and cost. Therefore, in the early days of 3D-printing, additive manufacturing was only applied for prototyping or for a small number of individual pieces. However, as additive manufacturing offers the possibility to design and produce components that cannot be produced by other conventional manufacturing techniques, there is a demand for using additive manufacturing for custom or serial production at an industrial scale. The development of additive manufacturing over the last decades has reduced the production time and cost to a certain extent, for instance by recirculation of raw material powder.

Despite processing steps like sieving and filtering, recirculating raw material powder inevitably introduces an uncertainty about the quality of the raw material powder that is used for additive manufacturing. Therefore, quality management and quality documentation for manufactured three-dimensional objects is a technical challenge.

It is therefore an object of the present disclosure to provide a method and monitoring system for monitoring recirculation of raw material powder in an additive manufacturing process, whereby the quality of the raw material powder that became part of the three-dimensional object can be assessed.

A solution to this problem is given by the subject-matter of the independent claims. Preferred embodiments can be deduced from the dependent claims, the description and the figures.

According to a first aspect of the present disclosure, a method for monitoring recirculation of raw material powder being used in an additive manufacturing process is provided, wherein the method comprises:
- loading a load of raw material powder into a raw material powder recirculation system of an additive manufacturing machine,
- transporting a subset of the load of raw material powder to a process chamber of the additive manufacturing machine,
- additively manufacturing at least a segment of a three-dimensional object in a build job by melting a portion of the subset in the process chamber,
- filtering a residual non-melted portion of the subset,
- recirculating the filtered residual non-melted portion of the subset back to the process chamber,
- additively manufacturing at least another segment of said or another three-dimensional object in said or another build job by melting a sub-portion of the recirculated filtered residual non-melted portion of the subset in the process chamber, and
- keeping track of a subset-specific recirculation counter being indicative of how often the melted portion or sub-portion of the subset was circulated through the process chamber before it was melted.

It should be noted that the raw material powder recirculation system of the additive manufacturing machine may be designed as a closed-loop recirculation system or a semi-closed-loop recirculation system. The load of raw material powder that is loaded to the raw material powder recirculation system may be virgin raw material powder that has not yet gone through an additive manufacturing process, or it may be recycled raw material powder that has already gone through an additive manufacturing process, or blends of those. The "subset" of the load of raw material powder may be defined as a batch or portion of raw material powder that has the same "process experience", i.e. of being exposed to heat exposure by laser radiation, heat exposure by a heated substrate plate, spatter, gas flow, potentially different oxygen levels etc. Before the subset of the load of raw material powder is transported to the process chamber of the manufacturing machine, the subset or the complete load of raw material powder may be filtered. For example, the raw material powder may be filtered before or during loading the load of raw material powder into the raw material powder recirculation system.

Preferably, the additive manufacturing process extends over a plurality of build jobs, wherein a build container is filled in a single build job for additively manufacturing one or more three-dimensional objects and the build container is exchanged for a subsequent build job for further additively manufacturing. The raw material powder recirculation system may thus contain one or more subsets of raw material powder from one or more previous build jobs. So, the recirculation is preferably performed across two or more build jobs. The track-keeping of the subset-specific recirculation counter is thus preferably performed across two or more build jobs.

Optionally, the previously described method steps are carried out in a concerted but time-shifted manner with a plurality of subsets of the said load of raw material powder and/or of one or more other loads of raw material powder for additively manufacturing a plurality of segments said or more three-dimensional objects in one or more build jobs. A subset may be recirculated through the raw material powder recirculation system a plurality of times over a plurality of build jobs. With each recirculation, the size of the subset reduces, because a first portion of the subset is melted in the additive manufacturing step, a second portion of the subset fills the build container and a third portion of the subset is filtered out in each recirculation cycle. So, the residual non-melted portion of the subset that is recirculated back to the process chamber reduces with each recirculation cycle. Other subsets of the same or another load of raw material powder may also be recirculated in parallel through the same raw material powder recirculation system. The three-dimensional object is finally comprised of segments, wherein each of the segments comprises the manufacturing layers of a single subset of raw material powder.

Optionally, the method may further comprise stacking at least two of the plurality of subsets in tiers, at a time, in a tank of the raw material powder recirculation system, and determining a current size of each subset in the tiers. The tank is preferably shaped to allow a mass flow, so that the first subset to enter the tank is also the first subset to leave the tank. Preferably, unintentional blending of the subsets in the tank is supposed to be minimal. So, as the current size of each subset in the tiers is determined, the subsets can be output from the tank separately without blending two or more subsets.

Optionally, determining the current size of each subset being stacked in tiers comprises determining a weight and/or volume of the latest stacked in tiers. For example, a gauge may determine the weight of the latest subset stacked in tiers. One or more filling level sensors may be used to determine the volume of the latest subset stacked in tiers.

Optionally, the method may further comprise discharging only one subset of the stacked subsets at a time from the tank for transporting or recirculating said subset to the process chamber if the current size of said subset is at or above a pre-determined or adjustable threshold. As the subset size reduces with each cycle through the raw material powder recirculation system, the size of the subset may fall below the pre-determined or adjustable threshold that is sufficient to assume no occurrence of blending of adjacent subsets that are stacked in a tank of the raw material powder recirculation system. As a certain degree of blending is inevitable in the contact region between two adjacent subsets stacked in tiers within a tank of the raw material powder recirculation system, the size of each subset should have at least the pre-determined or adjustable threshold size for the subset to be considered a subset of its own.

Optionally, the method may further comprise treating two adjacent stack subsets as one single subset if the current size of said subset is below the pre-determined or adjustable threshold, wherein the highest one of the subset-specific recirculation counters of the two adjacent subsets is continued for the track-keeping of said single subset. The idea is here that a subset below a certain size cannot be guaranteed to be kept separate from adjacent subsets stacked in tiers within the tank. As such a small subset contaminates a larger adjacent subset, the highest one of the subset-specific recirculation counters is continued for the "blended" single subset. Usually, the smaller of the adjacent subsets has the higher subset-specific recirculation counter. As such contamination of a subset by a too small adjacent subset should be avoided, it is useful to discard a subset out of the raw material powder recirculation system before it falls below such a size.

Optionally, the method may comprise discarding a subset out of the raw material powder recirculation system if the current subset-specific recirculation counter of said subset is at or above a threshold number, wherein the threshold number is preferably an adjustable user setting. A user may therefore determine a maximum number of cycles that a subset is allowed to be recirculated through the raw material powder recirculation system. The higher the threshold number is set, the more efficiently the raw material powder is used. The lower the threshold number is set, the less "process experience" the raw material powder has. It may be a user's choice to find a compromise between quality and efficiency by setting the threshold number.

Optionally, the method may further comprise keeping track of a subset-specific filter counter being indicative of how often the melted portion of sub-portion of the subset was filtered in the raw material powder recirculation system before it was melted. Usually, the filter counter is identical to the recirculation counter, because each subset is usually filtered before it is transported to the process chamber for additive manufacturing.

Optionally, the method may further comprise measuring subset-specific process parameters, for example pressure, temperature, humidity, and/or oxygen content of the inert gas atmosphere that the melted portion or sub-portion of the subset was exposed to before it was melted and/or is exposed to when it is melted. A tank of the raw material powder recirculation system may therefore be equipped with dedicated sensors for measuring the subset-specific process parameters. Alternatively, or in addition, the processed chamber may be equipped with such sensors, e.g. a pressure sensor, a temperature sensor, a humidity sensor, and/or oxygen content sensor.

Optionally, the method may further comprise recording in a processed documentation the current subset-specific recirculation counter and/or filter counter and/or process parameters for each segment of the three-dimensional object. Preferably, all segments of the three-dimensional object may have a dedicated recording in the process documentation, so that it is possible for a user to read in the process documentation the recirculation counter and/or filter counter and/or process parameters of the subset that said segment of the three-dimensional object was made of. This improves significantly quality management and quality documentation for a three-dimensional object that was additively manufactured. For example, if a three-dimensional object breaks in a stress test at a specific segment of the three-dimensional object, the process documentation may tell a user possible reasons for the structural deficiency. For example, the powder quality may have degraded too much during the recirculation cycles if the recirculation counter and/or filter counter is high. The process parameters may also tell a user if the additive manufacturing process was not performed under optimal conditions. The process parameters may be adapted accordingly and thresholds for the recirculation counter and/or filter counter may be set to define a certain quality level of the raw material powder for additive manufacturing.

Optionally, the method may further comprise extracting an identified sample of raw material powder from the subset before a portion or sub-portion of it is melted, and recording in the process documentation a reference to the identified sample for each segment of the three-dimensional object. The sample gives a user the opportunity to prove the raw material powder quality for any of the segments of the three-dimensional object if need be. Together with the process documentation having a reference to the identified sample, the user can prove the quality of the raw material powder used for additively manufacturing each segment of the three-dimensional object.

Optionally, the method may further comprise removing non-melted raw material powder located around a finished three-dimensional object from a build container after a build job, and recycling said removed non-melted raw material powder as a new load for subsequent build jobs, wherein the highest one of the subset-specific recirculation counters of the subsets removed from the build container is continued for further track-keeping of all subsets from the new load. Thus, the track-keeping of the subset-specific recirculation counter is preferably performed across two or more build jobs. The new load of raw material powder recycled from a de-powdered build container of one of the previous build jobs thus contains a blend of one or more subsets of raw material powder with process experience. The complete new load is then assumed to have the longest process experience of the blended subsets therein, i.e. it is associated with the largest of the recirculation counters of the blended subsets to be continued.

According to another aspect of the present disclosure, a raw material powder recirculation system of an additive manufacturing machine is provided, wherein the raw material powder recirculation system is configured to carry out the method as described above. Optionally, the raw material powder recirculation system may comprise a tank, wherein the tank is shaped as a mass flow silo allowing subsets of raw material powder to be stacked in tiers in the tank and to be discharged in the same order that the subsets entered the tank. In other words, the tank is shaped to allow a flow through the tank according to a "first in, first out" (FIFO) principle. A blending between the stacked subsets is minimal in the tank and occurs only in the contact areas of adjacent subsets stacked in the tank. Preferably, the tank is filled by an output of a filtering process, wherein the raw material powder is stacked on the previous subset preferably homogeneously distributed over the full cross-sectional area of the tank minimizing transverse motion of the raw material powder. Cone building, stagnant zones, or avalanches of raw material powder within the tank are generally not desired, because that would increase the risk of unintentional blending of raw material powder of different subsets.

According to another aspect of the present invention, a monitoring system for monitoring recirculation of raw material powder being used in an additive manufacturing process is provided, wherein the monitoring system is configured to keep track of a subset-specific recirculation counter according to the previously described method. Preferably, the monitoring system keeps track of the recirculation counter for each subset that currently resides within the raw material powder recirculation system, and for new loads of raw material powder that are recycled from de-powdered build containers of previous build jobs. Thereby, a subset can be discarded at any time if the recirculation counter exceeds a pre-determined or adjustable threshold. The monitoring system may also be used to record the process documentation.

Optionally, the monitoring system may comprise one or more sensors being arranged at a tank of the raw material powder recirculation system, wherein the one or more sensors are configured to determine a weight and/or volume of the latest subset stacked in tiers within the tank. Thereby, the monitoring system knowns the size of each subset stacked in tiers in the tank, so that the monitoring system may also be configured to control a powder conveyor, e.g. an auger powder conveyor, for discharging the bottom-most subset for transporting towards the process chamber. As the monitoring system knows the volume of each subset stacked in tiers in the tank, the powder conveyor can be controlled to precisely discharge only a single subset and may stop discharging when the next subset reaches the powder conveyor.

Optionally, the one or more sensors may be configured to determine subset-specific process parameters, for example, pressure, temperature, humidity, and/or oxygen content of the inhaled gas atmosphere that the melted portion or sub-portion of the subset was exposed to before it was melted.

Optionally, the monitoring system may be configured to record the current subset-specific recirculation counter and/or filter counter and/or process parameters in a process documentation for each segment of the three-dimensional object.

According to another aspect of the present invention, an additive manufacturing facility is provided comprising a plurality of raw material powder recirculation systems installed in parallel, wherein the additive manufacturing facility comprises a previously described monitoring system for monitoring recirculation of raw material powder in each of the plurality of raw material powder recirculation systems. The additive manufacturing facility may comprise a plurality of process chambers, wherein each of the raw material powder recirculation systems may be associated with one of the plurality of process chambers.

The additive manufacturing facility may further comprise:
- a de-powdering station for removing non-melted raw material powder located around the finished three-dimensional object within a build container, and
- a raw material powder supply system being configured to load the removed non-melted raw material powder and/or virgin raw material powder into each of the raw material powder recirculation systems.

The invention will now be described in further detail by reference to the accompanying figures, wherein
- Fig. 1: shows schematically an example of a raw material powder recirculation system according to the present invention;
- Fig. 2a, b, 3a, b and 4a: show schematically the raw material powder recirculation system of Fig. 1 in different phases of the recirculation during additive manufacturing;
- Fig. 4b: shows schematically how the non-melted raw material powder may be reused after a de-powdering process following the additive manufacturing process for filling a supply tank of the raw material powder recirculation system;
- Fig. 5: shows schematically an example how the processed documentation may contain subset-specific information about the recirculation counter and/or filter counter and/or process parameters for each segment of the three-dimensional object;
- Fig. 6: shows an example of a tank of the raw material powder recirculation system according to the present invention;
- Fig. 7: shows an example of an additive manufacturing facility comprising a plurality of raw material powder recirculation systems; and
- Fig. 8: shows another example of a raw material powder recirculation system comprising a disposal tank.

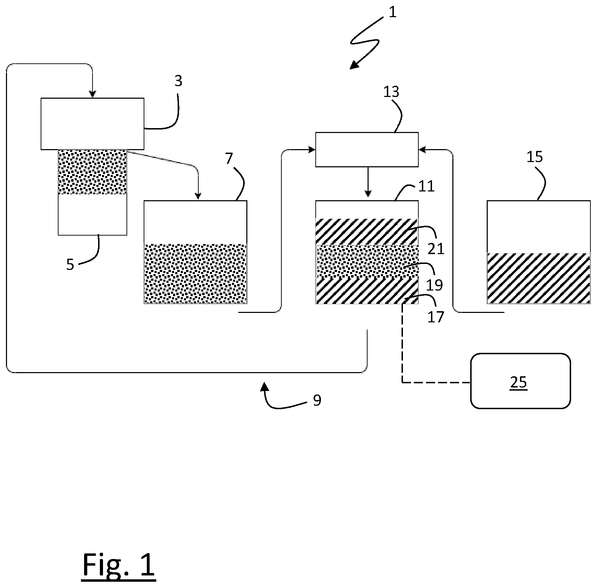

Fig. 1 shows schematically an example of an additive manufacturing machine 1 comprising a process chamber 3 for additively manufacturing a three-dimensional object using a laser powder bed fusion (LPBF). In LPBF, a bed of raw material powder is laid out on a substrate plate within the process chamber 3 and a laser system is used to melt the powder bed selectively where the three-dimensional object is supposed to be manufactured. Once the first layer of the three-dimensional object is melted, the substrate plate is lowered into a build container 5 located underneath the process chamber 3 by one layer width. Then, the next layer is laid out on the previous layer. Then, said layer is selectively laser-melted. This process is continued layer-by-layer, so that the three-dimensional object is lowered into the build container 5 until the additive manufacturing process is finished.

Each time a layer of raw material powder is laid out in the process chamber to establish a laser powder bed to be selectively laser-melted, more raw material powder is released into the process chamber than actually needed to establish the powder bed. An overdosing factor determines how much raw material powder is actually released into the process chamber for establishing the raw material powder bed. Excess raw material powder that is not used to establish the raw material powder bed is moved into an overflow tank 7 of the additive manufacturing machine 1.

The additive manufacturing machine 1 further comprises a raw material powder recirculation system 9 comprising a buffer tank 11. The raw material powder recirculation system 9 further comprises a sieve or filter unit 13 that may be integrated into the buffer tank 11 or installed as a separate unit. The raw material powder recirculation system 9 is configured to recirculate raw material powder from the overflow tank 7 of the additive manufacturing machine 1 via the sieve or filter unit 13 into the buffer tank 11 and from there back towards the process chamber 3 of the additive manufacturing machine 1 for additive manufacturing. The raw material powder recirculation system 9 may be a closed-loop system as shown in Fig. 1. In the closed loop example shown in Fig. 1, the raw material powder recirculation system 9 further comprises a supply tank for supplying the raw material powder recirculation system 9 with additional fresh raw material powder that may be virgin raw material powder, or recycled raw material powder from another additive manufacturing process. The additional raw material powder from the supply tank 15 may enter into the raw material powder recirculation system 9 via the sieve or filter unit 13 into the buffer tank 11.

As can be seen in Fig. 1, the buffer tank 11 may comprise a stack of different subsets of raw material powder that may originate from the supply tank 15 or from the overflow tank 7. In the example shown in Fig. 1, a bottom-most subset 17 of raw material powder entered the buffer tank 11 from the supply tank 15, a middle tier of the stack of subsets in buffer tank 11 comprises a subset 19 of raw material powder from the overflow tank 7. On top of the subset 19 of the overflow tank 7, another subset 21 from the supply tank 15 is stacked as the top-most subset of the subsets 17, 19, 21 stacked in tiers within the buffer tank 11.

As the different subsets 17, 19, 21 in the raw material powder recirculation system 9 may have different process experience, their quality may deviate from each other. This is, because the quality of the raw material powder may depend on how often it was exposed to the process environment within the process chamber 3 including heat exposure by laser radiation, heat exposure by a heated substrate plate, spatter, gas flow, potentially different oxygen levels etc. There is thus an interest to know which subset was actually used for additively manufacturing a certain segment of the three-dimensional object and what process experience said subset has. It is therefore an object of the present disclosure to provide a method and monitoring system for monitoring recirculation of raw material powder through the raw material powder recirculation system 9, whereby the quality of the raw material powder that became a segment of the three-dimensional object can be assessed.

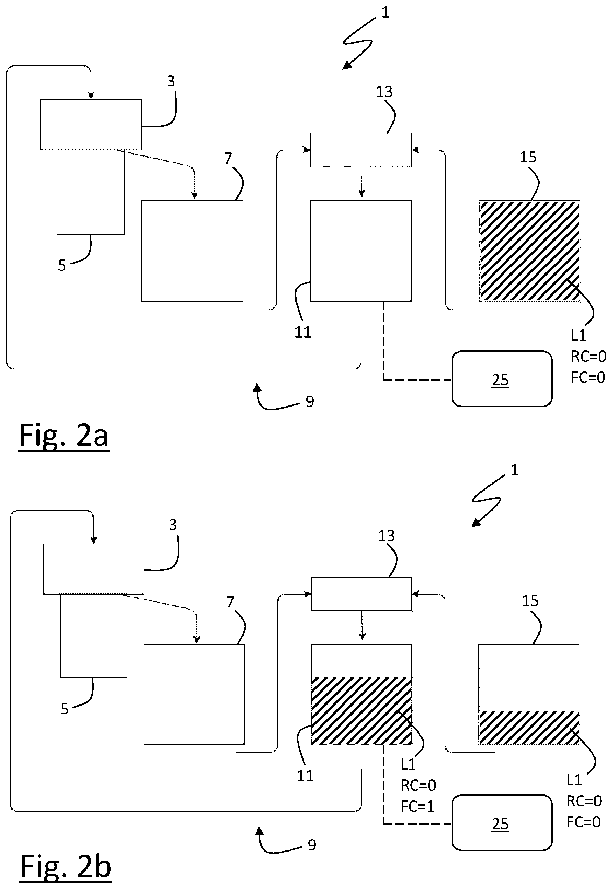

Figs. 2a, b, 3a, b and 4a show different phases of the raw material powder recirculation through the raw material powder recirculation system 9 of the additive manufacturing machine 1 as shown in Fig. 1. Fig. 2a shows a situation in which the raw material powder recirculation system is empty and only the supply tank 15 is filled with fresh raw material powder that is in this case virgin raw material powder with zero process experience, but may in other cases be raw material powder that is recycled from another build job. Both a recirculation counter RC and a FC counter are zero for a load L1 of virgin raw material powder in the supply tank 15. In Fig. 2b, the load L1 of raw material powder is loaded from the supply tank 15 through the sieve or filter unit 13 into the buffer tank 11. The additive manufacturing machine 1 is further equipped with a monitoring system 25 that keeps track of the size of the load L1 of raw material powder loaded into the buffer tank 11 after filtering by the sieve or filter unit 13. As the load L1 of raw material powder was filtered once, the filter counter FC for the load L1 of raw material powder in the buffer tank 11 is set to one. The recirculation counter RC is still at zero, because no subset of the load L1 of raw material powder has been recirculated through the raw material powder recirculation system 9 yet.

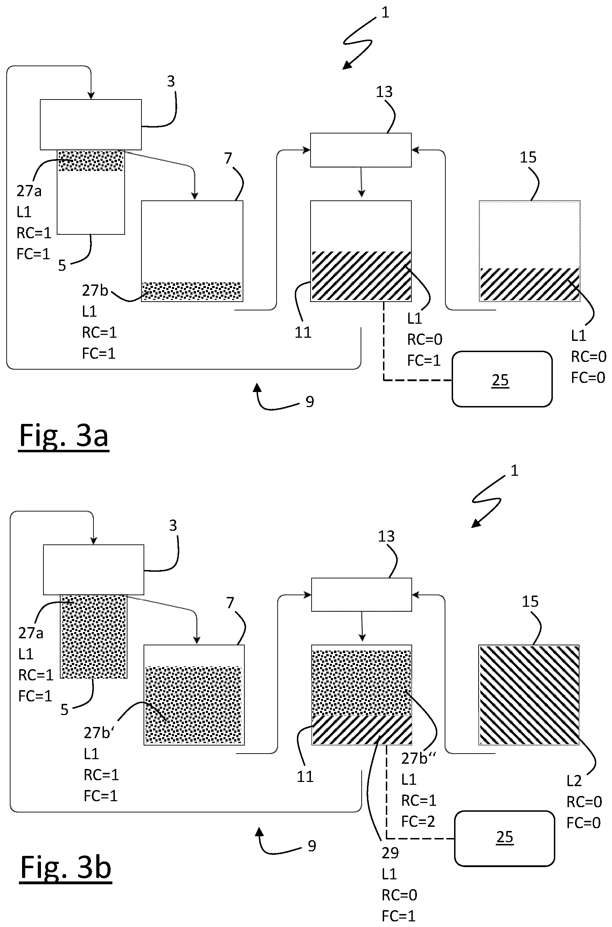

In Fig. 3a, a first subset 27a, b of the load L1 of raw material powder was transported to the process chamber 3 of the additive manufacturing machine 1. Furthermore, a first segment of the three-dimensional object was already additively manufactured by melting a portion of the subset 27a, b in the process chamber 3. The portion of the subset 27a, b that is actually melted in the additive manufacturing process is a sub-portion of an amount 27a of the raw material powder that fills the build container 5 during the additive manufacturing process. An overflow amount 27b of the subset 27a, b ends up in the overflow tank 7. The subset 27a, b was exposed once to the process environment within the process chamber 3, e.g. heat exposure by laser radiation, heat exposure by a heated substrate plate, spatter, gas flow and potentially different oxygen levels etc. Therefore, the monitoring system 25 increases the recirculation counter RC to one for the first subset 27a, b residing partly in the build container 5 and partly in the overflow tank 7.

Fig. 3b shows a situation in which the build container 5 is completely filled with an amount 27a of a single subset 27a, b of the first load L1 filled into the storage tank 11. The overflow tank 7 is also filled with an amount 27b of the first subset 27a, b. A portion of the residual non-melted amount 27b of the first subset 27a, b was filtered through sieve or filter unit 13 and refilled into the buffer tank 11. As the buffer tank 11 still contains raw material powder of the first load L1 that has not been transported yet to the process chamber 3, it is considered by the monitoring system 25 as a second subset 29 comprising a filter counter of 1 and a recirculation counter of zero. The filtered residual non-melted portion 27b" of the first subset 27a, b is stacked as a tier on top of the second subset 29 in the buffer tank 11. If the additive manufacturing process was not finished in figure 3b, the second subset 29 would be transported to the process chamber for further additive manufacturing. In Fig. 3b, the additively manufactured three-dimensional object comprises only a single segment made of a single subset 27a, b of raw material powder. The monitoring system 25 kept track of the subset-specific recirculation counter RC that is indicative of how often the subset 27a, b was recirculated through the process chamber 3 before it was melted. In the case of Fig. 3b, the recirculation counter RC of the complete three-dimensional object is 1, because all of the raw material powder used for additively manufacturing the three-dimensional object was only once exposed to the process environment of the process chamber 3. This is, however, only the situation for the first build job after an empty raw material powder recirculation system 9 is loaded with the first load L1 of virgin raw material powder.

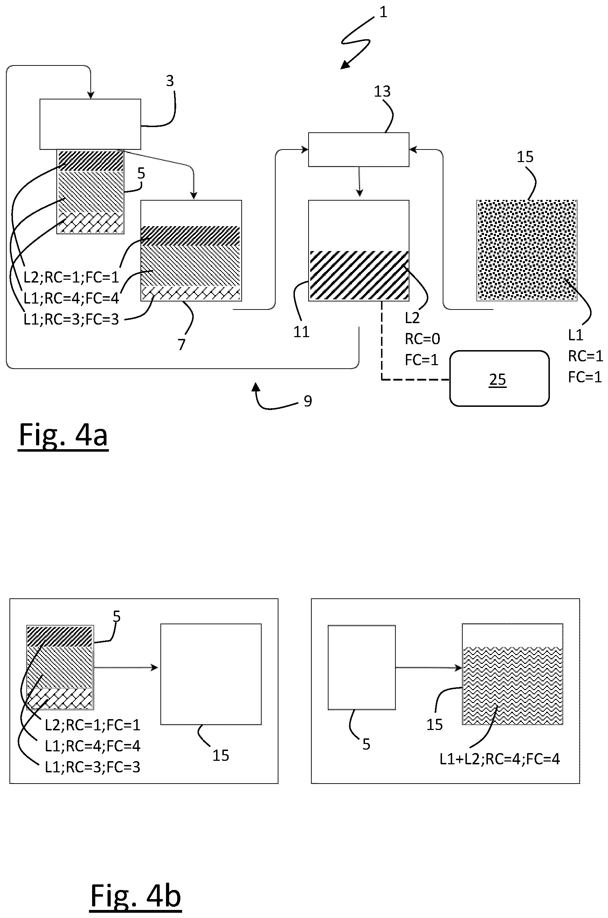

Fig. 4a shows the situation after some build jobs, wherein the additively manufactured three-dimensional object contains several segments, wherein each segment was made from a different subset of raw material powder that was recirculated through the raw material powder recirculation system 9. In Fig. 4a, the bottom-most segment of the three-dimension object is made from a subset of raw material powder that stems from the first load L1 of raw material powder and that was sieved and filtered in the sieve and filter unit 13 three times, i.e. FC=3, and exposed to the process environment of the process chamber 3 also three times, i.e. RC=3. A middle segment of the three-dimensional object was made of a subset from the first load L1 that was sieved and recirculated four times, i.e. RC=4 and FC=4. A top-most segment of the three-dimensional object is made of raw material powder from a second load L2 of raw material powder having a recirculation counter RC=1 and a filter counter FC=1. The monitoring system 25 kept track of the subset-specific recirculation counter RC for each of the subsets that are stacked in tiers within the build container 5. The overflow tank 7 contains a stack of subsets similar to the build container 5. The buffer tank 11 still contains a subset of raw material powder from the second load L2 with a filter counter FC=1 and a recirculation counter RC=1.

The supply tank 15 is filled with recycled raw material powder from the de-powdered build container of Fig. 3b. Therefore, the supply tank 15 in Fig. 4a contains raw material powder from the first load L1 with a filter counter FC=1 and a recirculation counter RC=1. Fig. 4b shows what happens when the build container 5 of Fig. 4a is de-powdered and the non-melted residual powder within the build container 5 of Fig. 4a is recycled into the supply tank 15. The supply tank 15 then contains a blend of different subsets from the first load L1 and the second load L2, wherein said blend is associated with the highest filter counter FC=4 and the highest recirculation counter RC=4 of the blended subsets. In the example shown in Fig. 4b, the supply tank then contains raw material powder as a blend of raw material powder from the first load L1 and the second load L2 with a filter counter FC=4 and a recirculation counter RC=4.

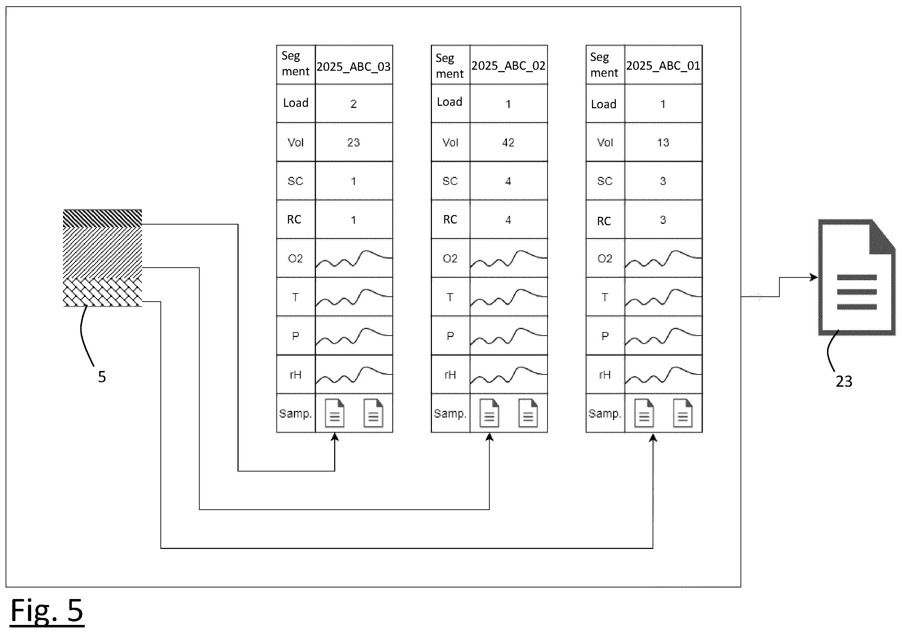

Fig. 5 shows an example of how the monitoring system 25 records in a process documentation 23 the current subset-specific recirculation counter RC and the filter counter FC and here in addition process parameters for each of the segments of the three-dimensional object. In a case that an identified sample of raw material powder is extracted from each of the subsets before a portion or sub-portion of it is melted in the additive manufacturing process, the process documentation may contain a reference to the identified sample for each segment of the three-dimensional object. The monitoring system 25 comprises here dedicated sensors arranged at the raw material powder recirculation system 9 in order to measure and record the oxygen content, the temperature, pressure and relative humidity of the process atmosphere the individual subset was exposed to before it was processed.

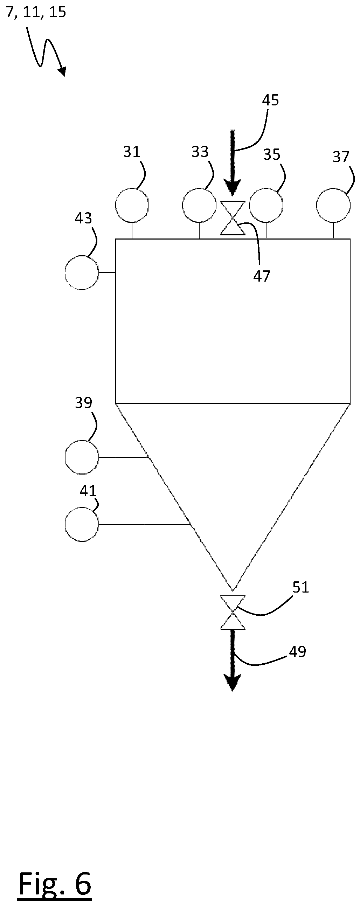

Fig. 6 shows an example of a tank of the raw material powder recirculation system 9. Fig. 6 may show the buffer tank 11 and/or the overflow tank 7 or another tank the raw material powder recirculation system 9. It is preferably equipped with a pressure sensor 31, an oxygen sensor 33, a temperature sensor 35, a humidity sensor 37 and a continuous filling level sensor, for example a weight scale 39. Optionally, a bottom filling level sensor 41 and a top filling level sensor 43, e.g. in form of optical sensors, may be installed at the tank of the raw material powder recirculation system 9. An inflow 45 of raw material powder into the tank is controlled by a first valve or conveyer 47. An outflow 49 of raw material out of the tank is controlled by a second valve or conveyer 51. The tank is shaped as a mass flow silo allowing subsets of raw material powder to be stacked in tiers in the tank and to be discharged in same order that the subset entered the tank, i.e. according to a "first in, a first out" (FIFO) principle.

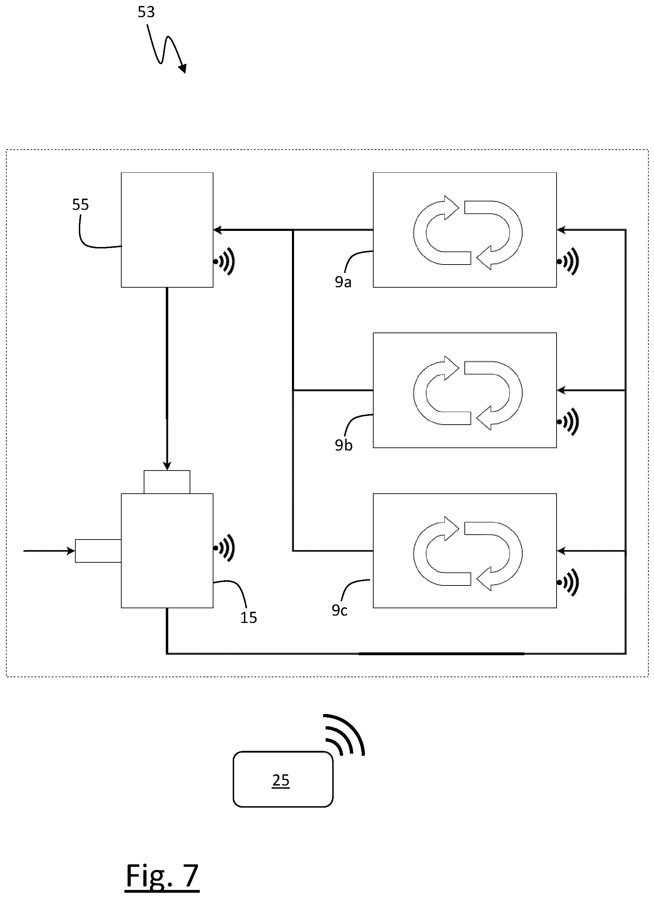

Fig. 7 shows an additive manufacturing facility 53 comprising a plurality of raw material powder recirculation systems 9a, b, c each serving an associated process chamber (not shown in Fig. 7). The monitoring system 25 receives, in the shown case via a wireless data connection, data from sensors of each of the raw material powder recirculation systems 9a,b, c as well as from a de-powdering station 55 of the additive manufacturing facility 53. A common supply tank 15 may also be equipped with sensors for providing data to be kept track of by the monitoring system 25. The common supply tank 15 may be fed by recycled raw material powder from the de-powdering station 55 as shown in Fig. 4b. The raw material powder recirculation systems 9a,b,c may share the de-powdering station 55, i.e. build containers 5 of the additive manufacturing machines are transported after a build job to the de-powdering station 55. The common supply tank 15 may be fed by virgin raw material powder or raw material powder recycled from another build job. Both, recycled raw material powder from the de-powdering station 55 and virgin raw material powder entering the common supply tank 15 may provide and opportunity to extract an identified sample of the raw material powder. Each of the raw material powder recirculation systems 9a,b,c may be loaded with a load of raw material powder from the common supply tank 15 as need be. The monitoring system 25 keeps track of all subset specific recirculation counters RC, and preferably also of filter counters FC and process parameters, in the raw material powder recirculation systems 9a,b,c in parallel.

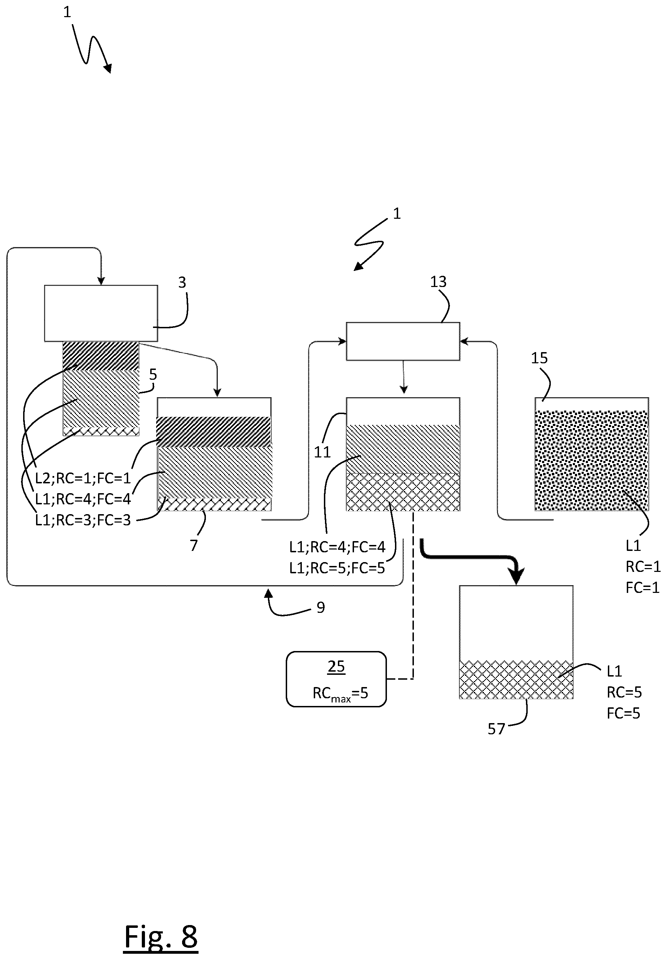

Fig. 8 shows an embodiment of the additive manufacturing machine 1 comprising a disposal tank 57 into which a subset of raw material powder can be discarded out of the raw material recirculation system 9. A user may define that a subset with a recirculation counter RC equal to exceeding a certain threshold, e.g. RCₘₐₓ=5, shall be discarded out of the raw material recirculation system 9 and not be recirculated anymore to the process chamber 3. For example, the buffer tank 11 may dump the subset of the first load with RC=5 and FC=5 into the disposal tank 57 when it is the bottom-most subset in the buffer tank 11.

### List of reference numerals

- 1: additive manufacturing machine
- 3: process chamber
- 5: build container
- 7: overflow tank
- 9, 9a-c: raw material powder recirculation system
- 11: buffer tank
- 13: sieve or filter unit
- 15: supply tank
- 17: first subset
- 19: second subset
- 21: third subset
- 23: process documentation
- 25: monitoring system
- 27a,b',b": first subset of first load
- 29: second subset of first load
- 31: pressure sensor
- 33: oxygen sensor
- 35: temperature sensor
- 37: humidity sensor
- 39: continuous filling level sensor, e.g. weight scale
- 41: lower filling level sensor, e.g. optical
- 43: upper filling level sensor, e.g. optical
- 45: inflow
- 47: valve or conveyor
- 49: outflow
- 51: valve or conveyor
- 53: additive manufacturing facility
- 55: de-powdering station
- 57: disposal tank
- RC: recirculation counter
- FC: filter counter
- L1: first load of raw material powder
- L2: second load of raw material powder
- RCₘₐₓ: threshold number

## Claims

1. A method for monitoring recirculation of raw material powder being used in an additive manufacturing process, wherein the method comprises:
- loading a load of raw material powder into a raw material powder recirculation system (9) of an additive manufacturing machine (1),
- transporting a subset of the load of raw material powder to a process chamber (3) of the additive manufacturing machine (1),
- additively manufacturing at least a segment of a three-dimensional object in a build job by melting a portion of the subset in the process chamber (3),
- filtering a residual non-melted portion of the subset,
- recirculating the filtered residual non-melted portion of the subset back to the process chamber (3),
- additively manufacturing at least another segment of said or another three-dimensional object in said or another build job by melting a sub-portion of the recirculated filtered residual non-melted portion of the subset in the process chamber (3), and
- keeping track of a subset-specific recirculation counter (RC) being indicative of how often the melted portion or sub-portion of the subset was circulated through the process chamber (3) before it was melted.

2. The method of claim 1, wherein the above-mentioned steps are carried out in a concerted but time-shifted manner with a plurality of subsets of said load of raw material powder and/or of one or more other loads of raw material powder for additively manufacturing a plurality of segments of said or more three-dimensional objects in one or more build jobs.

3. The method of claim 2, further comprising stacking at least two of the plurality of subsets in tiers, at a time, in a tank (7, 11, 15) of the raw material powder recirculation system (9), and determining a current size of each subset in the tiers.

4. The method of claim 3, wherein determining the current size of each subset being stacked in tiers comprises determining a weight and/or volume of the latest subset stacked in tiers.

5. The method of claim 3 or 4, further comprising discharging only one subset of the stacked subsets at a time from the tank (7, 11, 15) for transporting or recirculating said subset to the process chamber (3) if the current size of said subset is at or above a pre-determined or adjustable threshold.

6. The method of claim 5, further comprising treating two adjacent stacked subsets as one single subset if the current size of said subset is below the pre-determined or adjustable threshold, wherein the highest one of the subset-specific recirculation counters of the two adjacent subsets is continued for the track-keeping of said single subset.

7. The method of any of the preceding claims, further comprising discarding a subset out of the raw material powder recirculation system (9) if the current subset-specific recirculation counter of said subset is at or above a threshold number (RCₘₐₓ), wherein the threshold number (RCₘₐₓ) is preferably an adjustable user setting.

8. The method of any of the preceding claims, further comprising keeping track of a subset-specific filter counter (FC) being indicative of how often the melted portion or sub-portion of the subset was filtered in the raw material powder recirculation system (9) before it was melted.

9. The method of any of the preceding claims, further comprising measuring subset-specific process parameters, for example pressure, temperature, humidity, and/or oxygen content of the inert gas atmosphere that the melted portion or sub-portion of the subset was exposed to before it was melted and/or is exposed to when it is melted.

10. The method of any of the preceding claims, further comprising recording in a process documentation (23) the current subset-specific recirculation counter (RC) and/or filter counter (FC) and/or process parameters for each segment of the three-dimensional object.

11. The method of claim 10, further comprising extracting an identified sample of raw material powder from the subset before a portion or sub-portion of it is melted, and recording a reference to the identified sample in the process documentation (23) for each segment of the three-dimensional object.

12. The method of any of the preceding claims, further removing non-melted raw material powder located around a finished three-dimensional object from a build container (5) after a build job, and recycling said removed non-melted raw material powder as a new load for subsequent build jobs, wherein the highest one of the subset-specific recirculation counters of the subsets removed from the build container (5) is continued for further track-keeping of all subsets from the new load.

13. A raw material powder recirculation system (9) of an additive manufacturing machine (1), wherein the raw material powder recirculation system (9) is configured to carry out the method of any of the preceding claims.

14. The raw material powder recirculation system (9) of claim 13, further comprising a tank (7, 11, 15), wherein the tank (7, 11, 15) is shaped as a mass flow silo allowing subsets of raw material powder to be stacked in tiers in the tank (7, 11, 15) and to be discharged in the same order the subsets entered the tank (7, 11, 15).

15. A monitoring system (25) for monitoring recirculation of raw material powder being used in an additive manufacturing process, wherein the monitoring system (25) is configured to keep track of a subset-specific recirculation counter according to any of the claims 1 to 12.
